# EUROPÄISCHE PATENTANMELDUNG

(11) **EP 0 688 137 A2**
(43) Veröffentlichungstag der Anmeldung: **20.12.1995**
(21) Anmeldenummer: 95106047.4
(22) Anmeldetag: 22.04.1995
(51) Int. Cl.: H04Q 1/14

(54) **Automatische Verteilereinrichtung für Telekommunikations- und Datenleitungen**

(30) Priorität: 16.06.1994 DE 4420806
(71) Anmelder: KRONE Aktiengesellschaft, D-14167 Berlin (DE)
(72) Erfinder: Sander, Claus, Dipl. Ing., D-10717 Berlin (DE)

(57) **Zusammenfassung**

Die Erfindung bezieht sich auf eine automatische Verteilereinrichtung für Telekommunikations- und Datenleitungen, mit Anschlußterminals für Amts- und Teilnehmerkabel und mit einem fernsteuerbaren Beschaltungsgerät mit einem Greifelement.

Um eine mit Anschlußleisten versehene Verteilereinrichtung zu automatisieren, sind die Anschlußterminals in radial zu einer Zentralachse ausgerichteten Anschlußleisten (4) angeordnet, das Beschaltungsgerät (16) ist in der Zentralachse (9) schwenkbar und das Greifelement (21) ist am Beschaltungsgerät (16) radial ausschwenkbar gelagert.

## Beschreibung

Die Erfindung bezieht sich auf eine automatische Verteilereinrichtung für Telekommunikations- und Datenleitungen, mit Anschlußterminals für Amts- und Teilnehmerkabel und mit einem fernsteuerbaren Beschaltungsgerät mit einem Greifelement.

Eine automatische Verteilereinrichtung der gattungsgemäßen Art ist aus der Zeitschrift Fujitsu Sci.Tech.-J., 28,3, September 1992 , Seiten 422 bis 238 vorbekannt. Die vorbekannte automatische Verteilereinrichtung umfaßt zwischen den Anschlußterminals für die Amts- und Teilnehmerkabel eine Matrix aus einer gedruckten Leiterplatte mit als Matrixschalter dienenden Kreuzpunktlöchern, eine Vielzahl miniaturisierter Kontaktstifte und einen hochpräzisen Roboter als Beschaltungsgerät, um die Kontaktstifte in die Matrixlöcher einzusetzen und herauszuziehen. Mittels der vorbekannten automatischen Verteilereinrichtung ist eine automatische, fernsteuerbare Rangierung ohne Rangierkabel möglich.

Das vorbekannte, fernsteuerbare Beschaltungsgerät ist jedoch bei herkömmlichen Verteilereinrichtungen, die mit in Anschlußleisten angeordneten Anschlußterminals versehen sind und die in herkömmlicher Weise angeschlossene Rangierkabel erfordern, nicht möglich, da das fernsteuerbare Beschaltungsgerät bei einer Bewegung entlang der mit Rangierkabeln bestückten Anschlußleisten in Kollision mit den Rangierkabeln käme.

Der Erfindung liegt von daher die Aufgabe zugrunde, eine mit Anschlußleisten versehene Verteilereinrichtung mittels eines fernsteuerbaren Beschaltungsgerätes zu automatisieren und unter Vermeidung von Rangierkabeln fernsteuerbar zu beschalten.

Zur Lösung dieser Aufgabe sieht die Erfindung vor, daß die Anschlußterminals in radial zu einer Zentralachse ausgerichteten Anschlußleisten angeordnet, das Beschaltungsgerät in der Zentralachse schwenkbar und das Greifelement an dem Beschaltungsgerät radial ausschwenkbar gelagert sind. Hierbei werden die Teilnehmerkabel mit den Anschlußterminals der Anschlußleisten fest verbunden und die Amtskabel, die als Bündel, ausgehend vom Ende der Zentralachse, kegelförmig aufgefächert sind, werden mittels des Greifelementes des Beschaltungsgerätes mit den Anschlußterminals der Anschlußleisten verbunden. Das Greifelement kann hierbei in einfacher Weise zwischen den strahlenförmig um die Zentralachse herumgruppierten Anschlußleisten ausgeschwenkt und im eingeschwenkten Zustand um die Zentralachse gedreht werden, ohne daß Behinderungen durch die angeschlossenen Amtskabel erfolgen.

Die Anschlußleisten sind dabei insbesondere als Sekanten zu einer fiktiven Kugelkalotte oder kreisbogenförmig ausgeformt in der fiktiven Kugelkalotte angeordnet, deren Mittelpunkt in der Zentralachse liegt. Im letzteren Fall sind die kegelförmig aufgefächerten Amtskabel alle von gleicher Länge und können so mittels des Greifelementes in jeder gewünschten Position an einem in einer Anschlußleiste befindlichen Anschlußterminal angeschlossen werden. Hierzu weisen die Anschlußleisten Steckelemente zur Aufnahme von an den Enden der Amtskabel angebrachten Steckern auf.

Zur Fixierung vorübergehend oder längerfristig nicht benötigter Amtskabel sind neben den auf einem Teilbereich der fiktiven Kugelkalotte angeordneten, mit Schneidklemm-Kontaktelementen zum Beschalten mit den Teilnehmerkabeln versehenen Anschlußleisten auf einem anderen Teilbereich der Kugelkalotte nur mit Steckelementen versehene Depotleisten angeordnet.

Weitere vorteilhafte Ausgestaltungen der Erfindung betreffen die Ausbildung des Beschaltungsgerätes sowie des die automatische Verteilereinrichtung umhüllenden Gehäuses, das aus einer die in der fiktiven Kugelkalotte angeordneten Anschluß- und Depotleisten umgebenden, nach unten offenen Glocke und einem kegelförmigen Gehäuse gebildet ist, das von der Glocke überspannt ist und das das mit dem freien Ende nach unten vertikal angeordnete Beschaltungsgerät aufnimmt. Die derart ausgebildete automatische Verteilereinrichtung kann sowohl mittels einer Wandhalterung oder einer Säule oberhalb des Bodens oder auch unterhalb des Erdboden angeordnet sein, wobei sich die automatische Verteilereinrichtung in der Unterflurversion der Glocke nebst Gehäuse nach dem Caisson-Prinzip hochwasserfest installieren läßt.

Die Erfindung ist nachfolgend anhand eines Ausführungsbeispieles einer erfindungsgemäßen automatischen Verteilereinrichtung näher erläutert. Es zeigen:
- Fig. 1: Einen prinzipiellen Vertikalschnitt durch die Einrichtung,
- Fig. 2: einen Schnitt gemäß der Linie II-II in Fig.1,
- Fig. 3: die Draufsicht auf einen, die Anschluß- und Depotleisten aufnehmenden Zwischenboden,
- Fig. 4: die Ansicht der durch Glocke und kegelförmiges Gehäuse geschlossenen Verteiler einrichtung,
- Fig. 5: die Verteilereinrichtung gemäß Fig. 4 in Wandmontage,
- Fig. 6: die Verteilereinrichtung gemäß Fig. 4 in Unterflurmontage im Betriebszustand und
- Fig. 7: die Verteilereinrichtung gemäß Fig. 6 im Montagezustand.

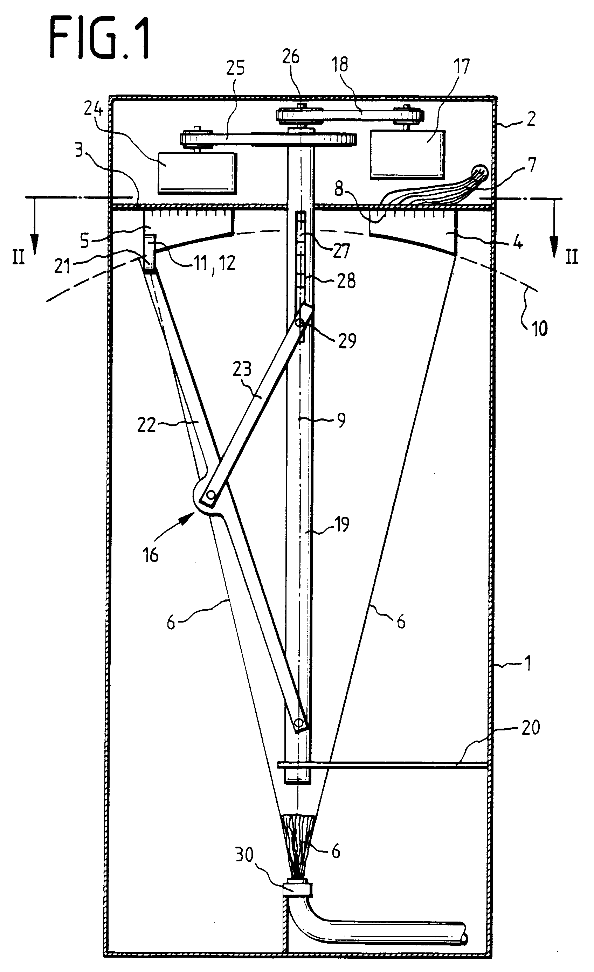

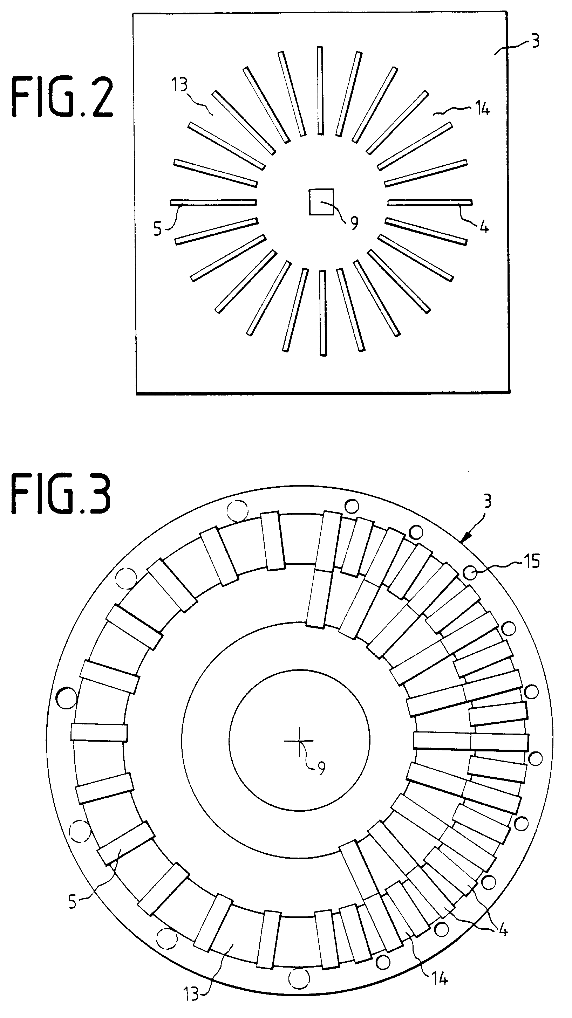

Die automatische Verteilereinrichtung für Telekommunikations- und Datenleitungen umfaßt ein in der Fig. 1 kastenförmiges und in den weiteren Ausführungsbeispielen kegelförmiges Gehäuse 1 und eine das Gehäuse 1 nach oben abschließende deckelartige Glocke 2, beide aus Kunststoff oder Aluminium. Im Gehäuse 1 sind unterhalb der Glocke 2 an einem Zwischenboden 3 eine Vielzahl von Anschluß- und Depotleisten 4,5 angeordnet, von denen die Anschlußleisten 4 mit Anschlußterminals für Amts- und Teilnehmerkabel 6 bzw. 7 versehen sind. Die Teilnehmerkabel 7 sind unterhalb der Glocke 2 an Anschlußterminals bildende Schneidklemm-Kontaktelemente 8 der Anschlußleisten 4 angeschlossen. Wie es die Figuren 2 und 3 zeigen, sind die mit den Anschlußterminals, z.B. in Form der Schneidklemm-Kontaktelemente 8, versehenen Anschlußleisten 4 und die Depotleisten 5 radial bzw. strahlenförmig zur Zentralachse 9 der Verteilereinrichtung ausgerichtet angeordnet. Ferner sind die Anschlußleisten 4 und auch die Depotleisten 5, wie es in Fig. 1 dargestellt ist, mindestens auf einer Seite kreisbogenförmig ausgeformt und so in einer fiktiven Kugelkalotte 10 angeordnet, deren Mittelpunkt in der Zentralachse 9 liegt. Alternativ können die Anschluß- und Depotleisten 4 bzw. 5 auch als Tangenten oder Sekanten zur fiktiven Kugelkalotte 10 angeordnet sein, wobei die Senkrechte zur Oberseite der ausgerichteten Anschluß- oder Depotleiste 4,5 durch den in der Zentralachse 9 liegenden Mittelpunkt der fiktiven Kugelkalotte 10 verläuft.

Sowohl die Anschluß- als auch die Depotleisten 4, 5 sind mit Steckelementen 11 zur Aufnahme von an den Enden der Amtskabel 6 angebrachten Steckern 12 versehen.

Wie es die Figuren 2 und 3 zeigen, sind auf einem Teilbereich der fiktiven Kugelkalotte 10 Anschlußleisten 4 mit Schneid-Klemm-Kontaktelementen 8 zum Beschalten mit den Teilnehmerkabeln 7 und auf einem anderen Teilbereich der fiktiven Kugelkalotte 10 nur mit den Steckelementen 11 versehene Depotleisten 5 angeordnet. Die Dichte der in Fig. 3 rechts dargestellten Anschlußleisten 4 ist größer als die Dichte der in Fig. 3 links dargestellten Depotleisten 5. Wesentlich ist, daß sowohl zwischen den strahlenförmig angeordneten Depotleisten 5 als auch zwischen den ebenfalls strahlenförmig angeordneten Anschlußleisten 4 radiale Freiräume 13,14 verbleiben, deren Zweck später noch erläutert werden wird. Die in Fig. 3 dargestellte Ausführungsform des Zwischenbodens 3 umfaßt am äußeren Umfang noch eine Anzahl von Durchgangsöffnungen 15, die der Kabeldurchführung dienen.

Innerhalb des in der Ausführungsform kegelförmigen Gehäuses 1 ist ein Beschaltungsgerät 16 angeordnet, das aus einer in der Zentralachse 9 gelagerten, von einem Elektromotor 17 und einem Riementrieb 18 motorisch drehangetriebenen Drehachse 19, die im Zwischenboden 3 und in einem Lagerarm 20 gelagert ist, einem am freien Ende der Drehachse 19 angelenkten, am freien Ende ein Greifelement 21 tragenden Schwenkarm 22 und einem am Schwenkarm 22 etwa mittig angreifenden Ausstellarm 23 gebildet, dessen anderes Ende an einem in der Drehachse 19 gelagerten, mittels eines Elektromotors 24 und eines Riementriebes 25 motorisch angetriebenen Vertikalantrieb 26 angelenkt ist. Dieser ist aus einer drehbar in der Drehachse 19 gelagerten, vom Motor 24 über den Riementrieb 25 drehangetriebenen Spindel 27 mit einer darauf drehbaren, in einer Vertikalnut 28 der Drehachse 19 geführten Spindelmutter 29 gebildet, die am Ende des Ausstellarmes 23 befestigt ist. Durch eine vom Elektromotor 24 über den Riementrieb 25 eingeleitete Drehbewegung der Spindel 27 wird die Spindelmutter 29 in der Vertikalnut 28 der Drehachse 19 auf- und abbewegt, durch der Ausstellarm 23 betätigt wird und wiederum den Schwenkarm 22 auswärts und einwärts schwenkt. Somit kann das am freien Ende des Schwenkarmes 22 angelenkte Greifelement 21 parallel zu den sternförmig angeordneten Anschluß- und Depotleisten 4,5 und zwischen diesen auswärts und einwärts geschwenkt werden. Bei einwärts geschwenktem Greifelement 21 kann unter Wirkung des Elektromotors 17 und des Riementriebes 18 die Drehachse 19 gedreht werden, um so das Greifelement 21 in einen anderen der Freiräume 13,14 zwischen den Anschluß- und Depotleisten 4,5 hineinzuschwenken.

Die beschriebene automatische Verteilereinrichtung arbeitet wie folgt:
An die von der Oberseite des Zwischenbodens 3 her zugänglichen Schneidklemm-Kontaktelemente 8 der Anschlußleisten 4 werden zunächst die Teilnehmerkabel 7 angeschlossen. Die in einer Kabelabfangung 30 unterhalb des unteren Endes der Drehachse 19 noch gebündelten und dann freigelegten Amtskabel 6 sind sämtlichst auf gleiche Länge geschnitten und an ihren freien Enden mit Steckern 12 versehen, die in die Steckelemente 11 der Depotleisten 5 eingesteckt sind. Die derart vorbereitete Verteilereinrichtung kann nunmehr über eine Fernsteuerung von einer nicht näher dargestellten Zentrale sowohl beschaltet als auch ohne das Vewenden zusätzlicher Rangierdrähte rangiert werden. Hierzu bedarf es nur der Betätigung der Elektromotoren 17,24 und des Greifelementes 21, die in nicht näher dargestellter Weise an die Fernsteuerung angeschlossen sind. Zur Herstellung einer Leitungsverbindung zwischen einem Amts- und einem Teilnehmerkabel 6 bzw. 7 wird der Stecker 12 eines einem bestimmten Teilnehmerkabel 7 zuzuordnenden Amtskabel 6 vom Greifelement 21 ergriffen und durch dessen Schwenk- und Drehbewegung zum Steckelement 11 des betreffenden Teilnehmerkabels 7 verfahren und dort eingesteckt, woraufhin das Greifelement 21 gelöst und einem neuen Beschaltungsvorgang zugeführt werden kann. In entsprechender Weise erfolgt eine Rangierung einer bestehenden Leitung dadurch, daß der betreffende Stecker 12 eines Teilnehmerkabels 7 mittels des zu diesem verfahrenen Greifelemtes 21 aus dem zugehörigen Steckelement 11 herausgezogen und durch Verschwenken und Verfahren des Greifelementes 21 dem Steckelement 11 des neuen Teilnehmerkabels 7 zugeführt wird. Auf diese Weise erfolgen Beschalten und Rangieren der automatischen Verteilereinrichtung in gleicher Weise, wobei zum Rangieren kein Rangierdraht erforderlich ist. Die gleiche Länge aller Amtskabel 6, gerechnet von der Kabelabfangung 30 aus, bewirkt, daß jeder Stecker 12 eines jeden Amtskabels 6 jedem beliebigen Steckelement 11 eines Teilnehmerkabels 7 zugeführt werden kann. Da somit sämtliche Amtskabel 6 innerhalb des Gehäuses 1 relativ straff gespannt sind, kann der Schwenkarm 22 zusammen mit dem Greifelement 21 frei in den Freiräumen 13,14 zwischen den Anschluß- bzw. Depotleisten 4,5 verfahren bzw. verschwenkt werden.

Die automatische Verteilereinrichtung eignet sich nicht nur für Kupferkabel, sondern wegen der eindeutigen und großen Biegeradien auch für Lichtwellenleiter.

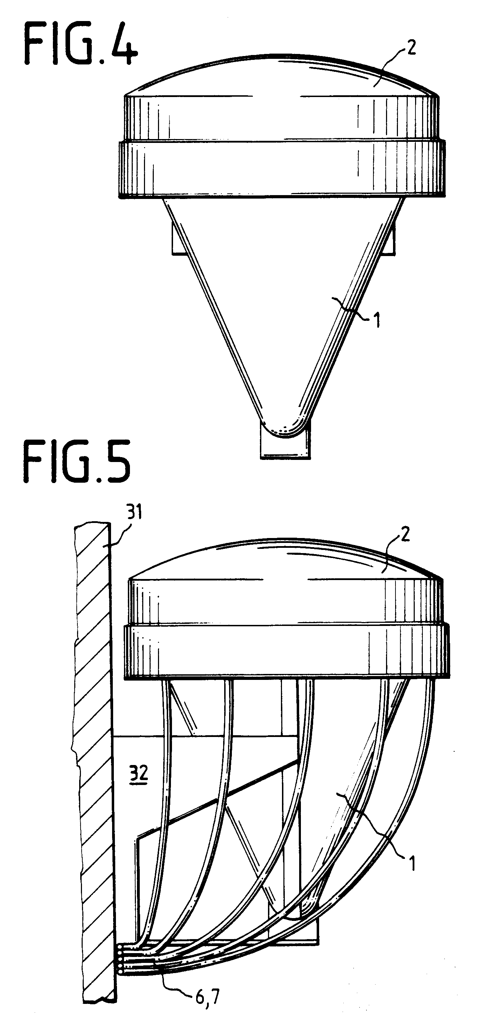

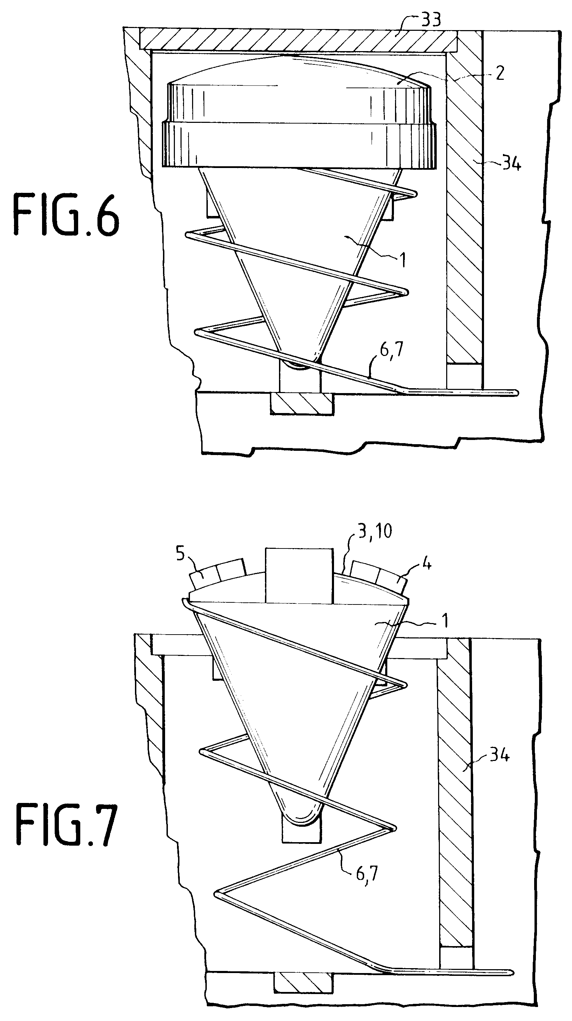

In den Figuren 4 bis 7 sind konkrete Ausführungsformen des kegelförmigen Gehäuses 1 und der dieses nach oben abschließenden Glocke 2 dargestellt. Die automatische Verteilereinrichtung kann somit gemäß Fig. 5 an einer Wand 31 mittels eines Kragarmes 32 gelagert werden, wobei die Amts- und Teilnehmerkabel 6,7 von unten in die Glocke 2 eingeführt und innerhalb der Glocke 2 bzw. am bodenseitigen Ende des kegelförmigen Gehäuses 1 festgelegt werden. Die Figuren 6 und 7 zeigen die besonders bevorzugte Anordnung der automatischen Verteilereinrichtung in Unterflurmontage, wobei innerhalb eines von einem Deckel 33 verschließbaren Schachtes 34 die automatische Verteilereinrichtung mit dem kegelförmigen Gehäuse 1 und der Glocke 2 gelagert ist. Die Kabelzuführung erfolgt spiralförmig von unten außerhalb des kegelförmigen Gehäuses 1 in die Glocke 2. Durch diese Unterfluranordnung arbeitet das Gehäuse 1 mit der Glocke 2 nach dem Caisson-Prinzip und läßt sich wasserfest installieren, wobei eventuell in den Schacht 34 eindringendes Wasser nicht in die Glocke 2 eindringen kann, da sich dort ein die Leitungsverbindungen schützendes Luftpolster bildet.

Nach dem Abnehmen des Deckels 33 vom Schacht 34 kann die automatische Verteilereinrichtung mittels eines Hebezeuges gemäß Fig. 7 ausgehoben und nach Abnehmen der Glocke 2 im Bereich der Teilnehmerkabel 7 beschaltet werden. Die Amtskabel 6 sind erst nach dem Abnehmen des kegelförmigen Gehäuses 1 zugänglich, wozu dieses zweiteilig ausgebildet sein kann.

## Patentansprüche

1. Automatische Verteilereinrichtung für Telekommunikations- und Datenleitungen, mit Anschlußterminals für Amts- und Teilnehmerkabel und mit einem fernsteuerbaren Beschaltungsgerät mit einem Greifelement,
**dadurch gekennzeichnet,**
daß die Anschlußterminals in radial zu einer Zentralachse ausgerichteten Anschlußleisten (4) angeordnet, das Beschaltungsgerät (16) in der Zentralachse (9) schwenkbar und das Greifelement (21) an dem Beschaltungsgerät (16) radial ausschwenkbar gelagert sind.

2. Automatische Verteilereinrichtung nach Anspruch 1, dadurch gekennzeichnet, daß die Anschlußleisten (4) als Sekanten zu einer fiktiven Kugelkalotte (10) angeordnet sind, deren Mittelpunkt in der Zentralachse (9) liegt.

3. Automatische Verteilereinrichtung nach Anspruch 1, dadurch gekennzeichnet, daß die Anschlußleisten (4) kreisbogenförmig ausgeformt und in einer fiktiven Kugelkalotte (10) angeordnet sind, deren Mittelpunkt in der Zentralachse (9) liegt.

4. Automatische Verteilereinrichtung nach den Ansprüchen 1 bis 3, dadurch gekennzeichnet, daß die Anschlußleisten (4) mit Steckelementen (11) zur Aufnahme von an den Enden der Amtskabel (6) angebrachten Steckern (12) versehen sind.

5. Automatische Verteilereinrichtung nach Anspruch 5, dadurch gekennzeichnet, daß auf einem Teilbereich der fiktiven Kugelkalotte (10) Anschlußleisten (4) mit Schneidklemm-Kontaktelementen (8) zum Beschalten mit den Teilnehmerkabeln (7) und auf einem anderen Teilbereich der fiktiven Kugelkalotte (10) nur mit Steckelementen (11) versehene Depotleisten (5) angeordnet sind.

6. Automatische Verteilereinrichtung nach den Ansprüchen 1 bis 5, dadurch gekennzeichnet, daß das Beschaltungsgerät (16) aus einer in der Zentralachse (9) gelagerten, motorisch drehangetriebenen Drehachse (19), einem an deren freien Ende angelenkten, am freien Ende das Greifelement (21) tragenden Schwenkarm (22) und einem am Schwenkarm (22) etwa mittig angreifenden Ausstellarm (23) gebildet ist, dessen anderes Ende an einem in der Drehachse (19) gelagerten, motorisch angetriebenen Vertikalantrieb (26) angelenkt ist.

7. Automatische Verteilereinrichtung nach Anspruch 6, dadurch gekennzeichnet, daß der Vertikalantrieb (26) aus einer drehbar in der Drehachse (19) gelagerten, motorisch drehangetriebenen Spindel (27) mit einer darauf drehbaren, in einer Vertikalnut (26) der Drehachse (19) geführten Spindelmutter (29) gebildet ist, die am Ende des Ausstellarmes (23) befestigt ist.

8. Automatische Verteilereinrichtung nach den Ansprüchen 6 und 7, dadurch gekennzeichnet, daß die Drehachse (19) des Beschaltungsgerätes (16) mit dem freien Ende nach unten vertikal angeordnet ist, das Beschaltungsgerät (16) von einem kegelförmigen, mit der Spitze nach unten angeordneten Gehäuse (1) ummantelt ist und die in der Kugelkalotte (10) angeordneten Anschluß- und Depotleisten (4,5) von einer Glocke (2) umgeben sind, die nach unten offen ist und das kegelförmige Gehäuse (1) überspannt.
